# EUROPEAN PATENT SPECIFICATION

(11) **EP 2 597 275 B1**
(45) Date of publication and mention of the grant of the patent: **15.06.2016**
(21) Application number: 11190091.6
(22) Date of filing: 22.11.2011
(51) Int. Cl.: F01K 13/02, F01K 7/02, F01K 17/02, F22G 5/18, F01K 7/22

(54) **Steam turbine plant for district heating applications**
Dampfturbinenanlage für Fernwärmeanwendungen
Centrale à turbine à vapeur pour le chauffage urbain

(43) Date of publication of application: 29.05.2013
(73) Proprietor: Siemens Aktiengesellschaft, 80333 München (DE)
(72) Inventor: Mazur, Oskar, 61236 Finspang (SE)

(56) References cited:
- EP-A1- 2 597 275
- JP-A- 2004 245 184
- JP-A- 2005 163 628
- US-A- 5 181 381
- US-A1- 2002 017 100

## Description

The present invention is related to steam turbine plants for district heating applications, a method for controlling a steam turbine plant as well as a district heating application comprising a steam turbine plant.

Steam turbine plants are generally known in particular for the use for district heating applications. Usually such steam turbines comprise at least two turbines, namely a first and a second turbine. The two turbines together form a so-called turbine train. The two turbines are working at different pressures, namely for example, the first turbine comprises the functionality of a high-pressure turbine, whereas the second turbine comprises the functionality of a low or intermediate pressure turbine. For efficiency reasons, between the two turbines, a reheater as well as a spray device is located within the steam line connecting the two turbines. The reheater is used to raise the temperature of the steam transported from the outlet of the first turbine to the inlet of the second turbine. For example US 2002/017100 A1 shows a steam generator plant with a reheating system. Also JP 2004 245 184 A discloses a reheat steam turbine plant with a bypass line in general.

However, due to the high possibility of fluctuations within the load of the district heating application, the reheater sometimes heats up the steam up to a temperature which is too high for the actual load situation of the district heating application. In particular suddenly according part load situations result in overheated steam at the inlet of the second turbine. To avoid such overheating situation, the spray device is used to cool down the reheated steam. This results in a waste of energy as well as in a relatively slow control time to adapt the reheater as well as the spray device to a part load situation in the district heating application.

It is an object of the present invention to solve aforesaid problems at least partly. In particular, it is an object of the present invention to provide a steam turbine plant for district heating applications, a district heating application comprising a steam turbine plant as well as a method for controlling a steam turbine plant, which are able to react with increased flexibility on different load situations in a district heating application.

Aforesaid problems are solved by steam turbine plant for a district heating application according to independent claim 1, a district heating application according to independent claim 6 and a method for controlling a steam turbine plant, according to independent claim 7. Further features and details of the present invention result from the subclaims, the description and the drawings. Features and details discussed with respect to the steam turbine plant can also be applied to the district heating application and the method for controlling a steam turbine plant and the other way around, if of technical sense.

A steam turbine plant for district heating application to the present invention comprises at least a first turbine and a second turbine. Of course also further turbines, for example a third turbine is possible according to the present invention. At the steam turbine plant an outlet of the first turbine is in steam communication with an inlet of the second turbine by a main line. A reheater is located within said main line for reheating steam from the outlet of the first turbine. As it is obvious from aforesaid discussion of the inventive steam turbine plant, the steam turbine plant is to be defined at least by the turbine train itself and the respective steam communication. Therefore, the smallest embodiment of an inventive steam turbine plant comprises the two turbines as well as the respective steam lines. A steam turbine plant according to the present invention therefore can also be called a steam turbine train.

A steam turbine plant according to the present invention is inter alia characterized by a bypass line which is provided for steam communication between a first turbine and a second turbine for bypassing a part of the steam around the reheater. The bypass line therefore is configured to bypass only a part of the steam. It is important, that not all of the steam, namely not 100% of the steam, is bypassed around the reheater. In other words, the bypass line offers a second steam communication between the first and the second turbine being used additional to the main line.

Between the turbines in a steam turbine plant for example with a high pressure turbine and a low pressure turbine the bypass line offers a bypass between the high pressure turbine and the low pressure turbine. Within a steam turbine plant comprising three different turbines, the bypass line is in particular provided between the high pressure turbine and the intermediate pressure turbine. Of course, the bypass line can also in addition or as alternative be provided between the intermediate pressure turbine and the low pressure turbine. The bypass line is in particular provided to open the steam communication in the situation of a part load of the district heating application. The use of only a part of the steam to be separated from the main line and the reheater leads to a reduced entrance temperature of the steam of the inlet of the second turbine without adaptation of the reheater. The rest of the steam, which is not bypassed around the reheater, passes the reheater itself. Therefore, the rest of the steam is used to be reheated and thereby cools the heating tubes within the reheater. Due to the fact that reheaters for example are boilers using gas, coal or other kinds of heat sources, a cooling of the heating tubes is necessary to avoid overheating of the reheater. Therefore, according to the present invention the bypass line only offers an additional steam communication between the two turbines. However, due to that additional steam communication, the entrance temperature of the inlet of the second turbine is reduced and thereby also the exhaust temperature of the second turbine is decreased. This leads to a better and optimized functionality of the second turbine in particular as to part load situations of the district heating application. Moreover, the decreased entrance temperature at the inlet of the second turbine leads to an increased life time of the second turbine. In other words, the bypass line according to the present invention can be summarized as a kind of buffer between the first and the second turbine for part load situations at the district heating application. In some embodiments, the spray device can be avoided by the use of a bypass line such that the complexity of the steam turbine plant can be reduced by the present invention. Moreover, the bypass line can react on part load situations a lot faster, for example by the use of valve or any other kind of flow control device, compared to a control as to the temperature of the reheating process of the reheater.

A steam turbine plant according to the present invention can for example be characterized in that the upstream part of the bypass line is connected to a separate bypass outlet of the first turbine. This leads to the possibility of a direct steam communication to the first turbine. Any further connections between the bypass line and for example the main line are not necessary as to this embodiment. Therefore, such embodiment is in particular used for already existing steam turbine plants due to the fact that existing main lines do not have to be touched or reconstructed. Moreover, the distance for the bypass line in particular between the first and the second turbine can be minimized by that use of such embodiment.

It can also be of advantage if a steam turbine plant according to the present invention is characterized in that the upstream part of the bypass line is connected to the main line upstream of the reheater. This is to be understood as an alternative to the embodiment discussed before. Moreover, this can lead to a reduced extension of the length of the bypass line. In particular only a bypass with respect to the geometrical extension of the reheater is necessary. Moreover, the geometry of already existing turbines does not have to be touched as to the construction.

Moreover it can be of advantage, if a steam turbine plant according to the present invention is characterized in that the downstream part of the bypass line is connected to the main line downstream of the reheater. In particular in connection to the embodiment with a connection to the main line of upstream part of the bypass line, the length of the bypass line can be minimized.

Also it is possible that a steam turbine according to the present invention is characterized in that the downstream of the bypass line is connected to a separate bypass inlet of the second turbine. In particular with respect to a combination with the upstream part of the bypass line being connected to a separate bypass outlet of the first turbine, the length of this bypass line with respect to the connection between the two turbines they can be reduced. Moreover, such kind of embodiment is totally independent from an already existing main line.

In any configuration falling within the scope of the present invention as defined by appended claims, at least either the upstream part of the bypass line is connected to a separate bypass outlet of the first turbine or the downstream part of the bypass line is connected to a separate bypass inlet of the second turbine.

It can also be of advantage, if the steam turbine plant according to the present invention is characterized at the bypass line comprising at least on bypass valve. The use of a bypass valve is one example to control the steam flow through the bypass line. Of course also other kinds of flow control devices can be used to control the flow within the bypass valve. A bypass valve is for example configured for almost or totally full closure and at least one further position, the so-called opening position. Therefore, the bypass valve is used to close and open the bypass line. The value of the part of the steam which is extracted from the main line and is transported via the bypass line to the second turbine can for example be defined by the bypass valve, any other kind of flow control devices or by the geometry of the bypass line itself.

Moreover, it can be of advantage, if the steam turbine plant according to the present invention is characterized in that the at least one bypass valve is configured for controlling flow through the bypass valve in particular in a continuous way. The use of a control valve for a bypass valve leads to in particular different situations as to the flow control within the bypass line. Therefore at least two different opening positions with respect to two different flow situations inside the bypass valve can be offered by the bypass valve. Therefore, at least two different bypass situations relating to two different values of the part of the steam to be extracted from the main line can be offered by the bypass valve. For example, a first opening situation is related to the extraction of about 30% of the steam of the main line, whereas a second opening position extracts up to 50% of the steam of the main line. The use of a bypass valve which is controllable in a continuous way leads to even more different and in particular flexible controllable values of the part of the steam which is extracted from the main line.

It is also possible that according to the present invention, the steam turbine plant is characterized in that the bypass line is configured for bypassing up to 50% of the steam of the first turbine. The bypass line is in particular configured to bypass between 20 and 50% of the steam of the first turbine. By the use of a bypass valve, this value of the steam to be bypassed can be adapted with high flexibility. In particular the maximal value of about 50% of the steam is of advantage to ensure that also during the use of the bypass line, the reheater is as still supplied with enough steam from the outlet of the first turbine to cool the reheater, namely to transport the heat produced by the reheater away from the reheater.

It is also possible that according to the present invention the steam turbine plant is characterized in that least one temperature sensor is provided at the second turbine and/or a district heating bleed for sensing the load situation. Due to the fact that the load situation of the district heating application is in correlation with the respective temperature of the second turbine and/or the district heating bleed, a control device can use the temperature measured by the temperature sensor to calculate the actual load situation. Such a control device can for example be configured to adapt the bypass line and/or the bypass valve within the bypass line to increase or decrease the steam flow within the bypass line. For example, if the load situation is up to full load, the bypass line can be closed by the control device.

A further object of the present invention is to provide a district heating application comprising a steam turbine plant with the features according to the present invention. Therefore, a district heating application according to the present invention provides the same advantages which have been discussed in detail above as to the inventive steam turbine plant.

Moreover, it is an object of the present invention to provide a method for controlling a steam turbine plant according to the present invention based on the load situation. The bypass line is opened for passing a part of the steam around the reheater in a part load situation. Thereby, the inventive method provides the same advantages, which have been discussed in detail as to the inventive steam turbine plant.

The present invention is further described with respect to the accompanying drawings. Within the drawings, the figures show schematically:
- Figure 1: a steam turbine plant according to the state of the art,
- Figure 2: a steam turbine plant according to one embodiment of the present invention,
- Figure 3: a steam turbine plant according to a further embodiment of the present invention,
- Figure 4: a steam turbine plant not representing an embodiment of the present invention, and
- Figure 5: a steam turbine plant according to a further embodiment of the present invention.

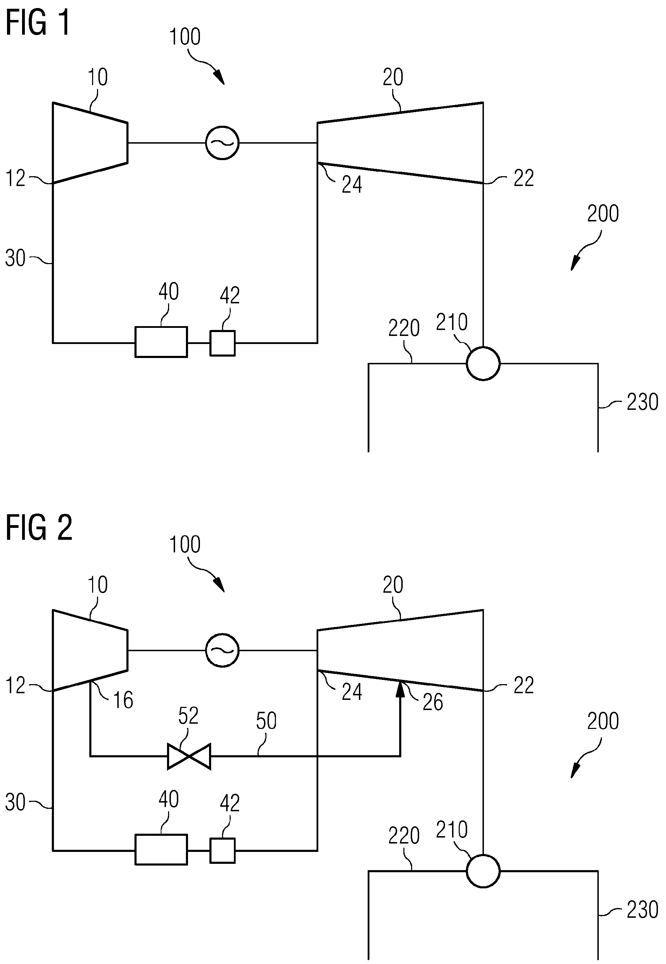

In figure 1, a steam turbine plant 100 according to the state of the art is depicted. It comprises a first turbine 10 and a second turbine 20. For example, the first turbine 10 is a high pressure turbine whereas the second turbine 20 is a intermediate or a low pressure turbine. The first turbine 10 comprises an outlet 12 whereas the second turbine 20 comprises an inlet 24. The outlet 12 and the inlet 24 are in steam communication via main line 30. Within the main line 30, a reheater 40 is located to increase the temperature of the steam coming from the outlet 12 of the first turbine 10. In the steam turbine plant 100 according to the state of the art in figure 1, the outlet 22 of the second turbine 20 is connected to a district heating application 200. It comprises a district heating bleed 210 and a forward district heating 220 as well as a return district heating 230. In the case of part load of the district heating application 200, the reheater 40 cannot be adapted fast enough to apply to that drop of load at the district heating application 200. Therefore, a spray device 42 is located within the main line 30 to cool down the reheated steam in the main line 30 before it enters the inlet 24 of the second turbine 20.

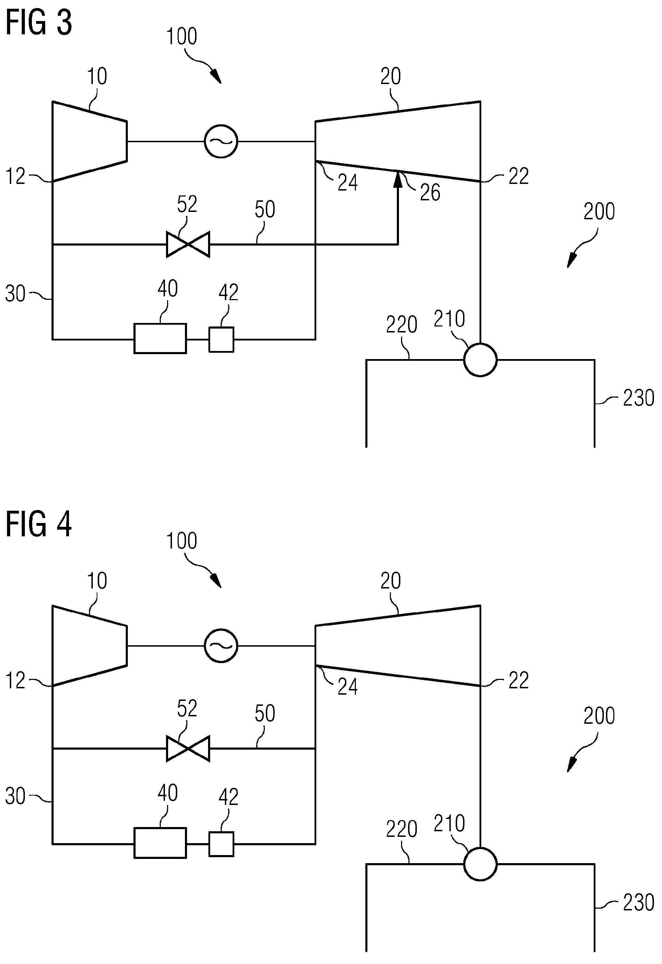

To reduce the need of a spray device 42 or eliminate the spray device 42 and further to increase the flexibility of the steam turbine plant 100, according to the present invention a bypass line 50 is provided between the first turbine 10 and the second turbine 20. Figures 2, 3, 4 and 5 show different embodiments of said bypass line 50, wherein only figures 2, 3, and 5 show embodiments according to the present invention. The embodiment shown by figure 4 is merely helpful to understand the present invention. For all embodiments it is common, that the bypass line 50 comprises in particular one bypass valve 52. This bypass valve 52 is configured to provide a control of flow within the bypass line 50, in particular between a fully closed situation to a situation where up to 50% of the steam within the main line 30 are extracted into the bypass line 50 and thereby are bypassing around the reheater 40.

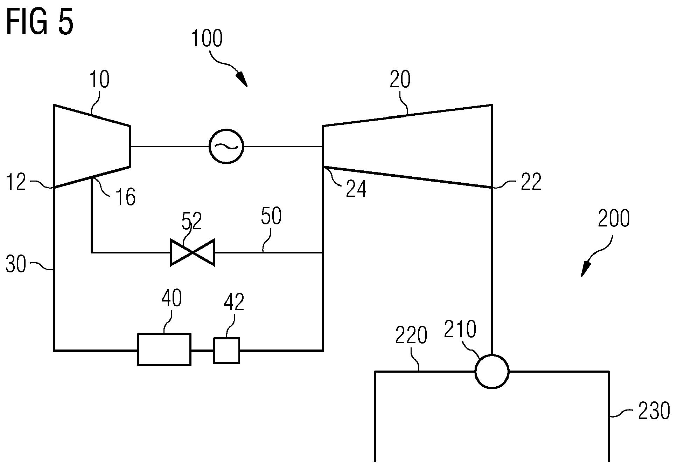

The embodiments of figure 2 to 5 differ from each other by the respective connection of the bypass line 50 to the rest of the system. In the embodiment of figure 2, the bypass line 50 is providing a steam connection between a separate bypass outlet 16 of the first turbine 10 and a separate bypass inlet 26 of the second turbine 20. The contrary embodiment is shown in figure 4, whereas the bypass line 50 is connected between the main line 40 upstream and downstream of the reheater 40. In figures 3 and 5 combinations of the two aforesaid embodiments are depicted. All embodiments together comprise a different solutions for the use of a bypass line 50 to bypass steam around the reheater 40 in part load situations in the district heating application 200. This leads to a reduction of the temperature of the steam entering the second turbine for example through the inlet 24 and/or the bypass inlet 26 of the second turbine 20. Therefore, the entrance temperature of the steam of the second turbine 20 is decreased and as well as that, the exhaust temperature of the second turbine 20 is reduced. This leads to a longer life time of the second turbine 20 as well as to high flexibility with respect to part load situation at the district heating application.

Of course, the aforesaid description of the different embodiments describes the present invention only by the way of examples. Therefore, the different features discussed as to the different embodiments can be combined, if of technical sense, freely without leaving the scope of the present invention, as defined by appended claims.

## Claims

1. Steam turbine plant (10) for district heating applications (200), comprising at least a first turbine (10) and
a second turbine (20), wherein an outlet (12) of the first turbine (10) is in steam communication with an inlet (24) of the second turbine (20) by a main line (30), and wherein a reheater (40) is located within said main line (30) for reheating of steam from the outlet (12) of the first turbine (10), wherein
a bypass line (50) is provided for steam communication between the first turbine (10) and the second turbine (20) for bypassing a part of the steam around the reheater (40) **characterized in that**
the upstream part of bypass line (50) is connected to a separate bypass outlet (16) of the first turbine (10) and/or the downstream part of the bypass line (50) is connected to a separate bypass inlet (26) of the second turbine (20).

2. Steam turbine plant (100) according to claim 1, **characterized in that**
the bypass line (50) comprises at least one bypass valve (52).

3. Steam turbine plant (100) according to claim 1 or 2, **characterized in that** the at least one bypass valve (52) is configured for controlling flow through the bypass valve (52) in particular in a continuous way.

4. Steam turbine plant (100) according to any of the preceding claims, **characterized in that** the bypass line (50) is configured for bypassing up to 50% of the steam of the first turbine (10).

5. Steam turbine plant (100) according to any of the preceding claims, **characterized in that** at least one temperature sensor is provided at the second turbine (20) and/or a district heating bleed (210) for sensing the load situation.

6. District heating application (200) comprising a steam turbine plant (100) with the features according to any of claims 1 to 5.

7. Method for controlling a steam turbine plant (100) with the features according to any of claims 1 to 5 based on the load situation by opening the bypass line (50) for bypassing a part of the steam around the reheater (40) in a part load situation.

## Patentansprüche

1. Dampfturbinenanlage (10) für Fernwärmeanwendungen (200), die zumindest eine erste Turbine (10) und eine zweite Turbine (20) umfasst, wobei ein Auslass (12) der ersten Turbine (10) über eine Hauptleitung (30) mit einem Einlass (24) der zweiten Turbine (20) dampfverbunden ist und sich ein Zwischenüberhitzer (40) zum erneuten Erhitzen von Dampf aus dem Auslass (12) der ersten Turbine (10) in der Hauptleitung (30) befindet, wobei zum Vorbeiführen eines Teils des Dampfes am Zwischenüberhitzer (40) eine Bypassleitung (50) für die Dampfverbindung zwischen der ersten Turbine (10) und der zweiten Turbine (20) bereitgestellt ist, **dadurch gekennzeichnet, dass** der in Strömungsrichtung vordere Teil der Bypassleitung (50) mit einem separaten Bypassauslass (16) der ersten Turbine (10) und/ oder der in Strömungsrichtung hintere Teil der Bypassleitung (50) mit einem separaten Bypasseinlass (26) der zweiten Turbine (20) verbunden ist.

2. Dampfturbinenanlage (100) nach Anspruch 1, **dadurch gekennzeichnet, dass** die Bypassleitung (50) mindestens ein Bypassventil (52) umfasst.

3. Dampfturbinenanlage (100) nach Anspruch 1 oder 2, **dadurch gekennzeichnet, dass** das mindestens eine Bypassventil (52) für das Steuern der Strömung durch das Bypassventil (52), insbesondere auf kontinuierliche Weise, konfiguriert ist.

4. Dampfturbinenanlage (100) nach einem der vorhergehenden Ansprüche, **dadurch gekennzeichnet, dass** die Bypassleitung (50) für das Vorbeiführen von bis zu 50% des Dampfes der ersten Turbine (10) konfiguriert ist.

5. Dampfturbinenanlage (100) nach einem der vorhergehenden Ansprüche, **dadurch gekennzeichnet, dass** mindestens ein Temperatursensor zum Erkennen der Lastsituation an der zweiten Turbine (20) und/ oder einem Fernwärmeablass (210) bereitgestellt ist.

6. Fernwärmeanwendung (200), die eine Dampfturbinenanlage (100) mit den Merkmalen nach einem der Ansprüche 1 bis 5 umfasst.

7. Verfahren zum Steuern einer Dampfturbinenanlage (100) mit den Merkmalen nach einem der Ansprüche 1 bis 5 in Abhängigkeit von der Lastsituation durch Öffnen der Bypassleitung (50) zum Vorbeiführen eines Teils des Dampfes an dem Zwischenüberhitzer (40) in einer Teillastsituation.

## Revendications

1. Centrale à turbine à vapeur (10) destinée à des applications de chauffage de quartier (200), comprenant au moins une première turbine (10) et une deuxième turbine (20), dans laquelle une évacuation (12) de la première turbine (10) est en communication de vapeur avec une admission (24) de la deuxième turbine (20) par une conduite principale (30), et dans laquelle un resurchauffeur (40) est situé à l'intérieur de ladite conduite principale (30) pour resurchauffer la vapeur en provenance de l'évacuation (12) de la première turbine (10), dans laquelle
une conduite de dérivation (50) est prévue pour une communication de vapeur entre la première turbine (10) et la deuxième turbine (20) pour dériver une partie de la vapeur autour du resurchauffeur (40) **caractérisée en ce que**
la partie amont de la conduite de dérivation (50) est connectée à une évacuation de dérivation séparée (16) de la première turbine (10) et/ou la partie aval de la conduite de dérivation (50) est connectée à une admission de dérivation séparée (26) de la deuxième turbine (20).

2. Centrale à turbine à vapeur (100) selon la revendication 1, **caractérisée en ce que** la conduite de dérivation (50) comprend au moins une soupape de dérivation (52).

3. Centrale à turbine à vapeur (100) selon la revendication 1 ou 2, **caractérisée en ce que** l'au moins une soupape de dérivation (52) est configurée pour commander l'écoulement à travers la soupape de dérivation (52) en particulier de manière continue.

4. Centrale à turbine à vapeur (100) selon l'une quelconque des revendications précédentes, **caractérisée en ce que** la conduite de dérivation (50) est configurée pour dériver jusqu'à 50 % de la vapeur de la première turbine (10).

5. Centrale à turbine à vapeur (100) selon l'une quelconque des revendications précédentes, **caractérisée en ce qu'**au moins un capteur de température est prévu au niveau de la deuxième turbine (20) et/ou d'un soutirage de chauffage de quartier (210) pour capter la situation de charge.

6. Application de chauffage de quartier (200) comprenant une centrale à turbine à vapeur (100) avec les caractéristiques selon l'une quelconque des revendications 1 à 5.

7. Procédé destiné à commander une centrale à turbine à vapeur (100) avec les caractéristiques selon l'une quelconque des revendications 1 à 5 sur la base de la situation de charge en ouvrant la conduite de dérivation (50) en vue de dériver une partie de la vapeur autour du resurchauffeur (40) dans une situation de charge partielle.
